Europäisches Patentamt

European Patent Office

Office européen des brevets

(11) Veröffentlichungsnummer: **0 026 374**
**B1**

(12) **EUROPÄISCHE PATENTSCHRIFT**

(45) Veröffentlichungstag der Patentschrift:
27.07.83

(51) Int. Cl.³: **H 02 J 3/34**, H 02 J 3/26,
H 02 M 5/04 // B60L9/26

(21) Anmeldenummer: **80105470.1**

(22) Anmeldetag: **12.09.80**

(54) **Vorrichtung zur Übertragung elektrischer Energie hoher Leistung aus einem dreiphasigen Versorgungsnetz höherer Frequenz in ein einphasiges Lastnetz niedrigerer Frequenz.**

(30) Priorität: 28.09.79 DE 2939514

(43) Veröffentlichungstag der Anmeldung:
08.04.81 Patentblatt 81/14

(45) Bekanntmachung des Hinweises auf die Patenterteilung:
27.07.83 Patentblatt 83/30

(84) Benannte Vertragsstaaten:
AT CH DE LI SE

(56) Entgegenhaltungen:
DE-A-2 415 398
DE-A-2 746 588
DE-B-1 112 573
FR-A-1 518 185
US-A-3 053 920
ELEKTROWÄRME INTERNATIONAL, Band 32,
B6, Dezember 1974, Essen, DE, S. JÄGER:
»Beispiele von Anlagen zur Blindstromkompensation, Symmetrierung und Spannungsunterstützung industrieller Elektrowärmeanlagen« Seiten
B326—B334

(73) Patentinhaber: **SIEMENS AKTIENGESELLSCHAFT,
Berlin und München Wittelsbacherplatz 2,
D-8000 München 2 (DE)**

(72) Erfinder: **Möltgen, Gottfried, Dr. Prof., Ebracher Weg 1,
D-8520 Erlangen (DE)**

Vorrichtung zur Übertragung elektrischer Energie hoher Leistung aus einem
dreiphasigen Versorgungsnetz höherer Frequenz in ein einphasiges Lastnetz niedrigerer Frequenz

Die Erfindung betrifft eine Vorrichtung zur Übertragung elektrischer Energie hoher Leistung aus einem dreiphasigen Versorgungsnetz höherer Frequenz in ein einphasiges Lastnetz niedrigerer Frequenz.

Um elektrische Energie z. B. aus einem 50-Hz-Drehstromnetz bzw. einem 50-Hz-Drehstromgenerator in ein 16 2/3-Bahnnetz zu übertragen, verwendet man bisher eine asynchrone Kupplung mit rotierenden Umformern.

Zur Frequenzuntersetzung sind Umrichter entwickelt worden, die ohne Zwischenstromkreis arbeiten und durch entsprechende Zündung der Stromrichterventile geeignete zeitliche Abschnitte der Eingangsspannung herausschneiden, die an der Ausgangsseite zu der gewünschten Spannung niedrigerer Frequenz zusammengesetzt werden können. Zur Speisung von Drehstromverbrauchern sind derartige Direktumrichter mit dreiphasigem Ausgang (Drehstrom-Drehstrom-Direktumrichter) bekannt, die aus drei Umkehrstromrichtern bestehen, von denen jeder auf einen der Drehstromausgänge arbeitet; es können aber z. B. auch drei in einer Dreiecksschaltung zusammengefaßte Stromrichter verwendet werden (Möltgen, »Netzgeführte Stromrichter mit Thyristoren«, Berlin – München, 1974, Seite 296f, Bilder 225 und 226).

Zur Speisung eines einphasigen Wechselstromverbrauchers mit Direktumrichtern werden bisher ausschließlich Direktumrichter mit einphasigem Ausgang verwendet, wobei eine Frequenzuntersetzung bis etwa 2,5 möglich ist. Besonders interessant ist das Verhältnis 3 für Umrichter zur elastischen Kupplung eines 50-Hz-Netzes mit dem 16 2/3-Hz-Einphasen-Bahnnetz. Nachteilig ist dabei aber, daß das Einphasennetz ein unbalanciertes System darstellt. Wenn der Umrichter nicht wenigstens einen nachgeschalteten umfangreichen Energiespeicher enthält, übertragen sich die Leistungsschwankungen in voller Höhe in das 50-Hz-Netz. Es hängt daher von der Kurzschlußleistung des 50-Hz-Netzes ab, bis zu welcher Leistung derartige Direktumrichter verwendet werden können und es galt bisher die Lehrmeinung, daß ohne erheblichen Zusatzaufwand an Umrichter so großer Leistung (z. B. 50 MVA), wie sie in rotierenden Umformern zur asynchronen Kupplung installiert werden, nicht zu denken ist.

Insbesondere im Leistungsbereich oberhalb 100 MW bedeuten die Lastschwankungen im Rhythmus der Frequenz 33 1/3 Hz einen Beitrag zur Modulationsleistung von der Größenordnung 100 MVA zur Rechtleistung, der für das 50 Hz-Netz im allgemeinen viel zu groß ist bzw. bei einer Einspeisung aus einem 50 Hz-Drehstromgenerator nur eine schlechte Ausnützung des Generators erlaubt.

In der DE-A1-2 746 588 ist eine Vorrichtung der eingangs genannten Art vorgeschlagen, bei der zwei Direktumrichter mit einphasigem niederfrequenten Ausgang drehstromseitig parallel geschaltet sind und jeweils über einen Energiespeicher (Induktivität bzw. Reihenschaltung aus Kapazität und Induktivität) über einen gemeinsamen parallel geschalteten Transformator in ein 16 2/3 Hz-Netz einspeisen. Ein aufwendiges Steuerverfahren ermöglicht es, daß die Wirkleistungspulsationen beider Direktumrichter sich gegenseitig aufheben, jedoch ist jeder Direktumrichter auf die volle Wirkleistungspulsation auszulegen. Außerdem sind zur Herabsetzung der für jeden der beiden Direktumrichter unvermeidlichen Blindleistung und Blindleistungspulsation, die die Ausnutzung der installierten Umrichterleistung zusätzlich verschlechtern, weitere Maßnahmen notwendig.

Der Erfindung liegt die Aufgabe zugrunde, eine Vorrichtung anzugeben, die bei hoher Leistung, insbesondere im Leistungsbereich oberhalb 100 MW, eine Übertragung elektrischer Energie aus einem höherfrequenten Versorgungsnetz, z. B. aus einem 50-Hz-Drehstromnetz bzw. einem 50-Hz-Drehstromgenerator, in ein niederfrequenteres Lastnetz, insbesondere ein 16 2/3-Hz-Bahnnetz erlaubt, ohne daß die erwähnten Rückwirkungen auftreten. Insbesondere soll hierzu im Hinblick auf einen guten Wirkungsgrad ein Direktumrichter mit Drehstromausgang verwendet werden.

Dies wird dadurch erreicht, daß an dem Versorgungsnetz ein frequenzuntersetzender Direktumrichter mit einem dreiphasigen Ausgang (Drehstrom-Drehstrom-Direktumrichter) angeschlossen ist. Zwei der drei Phasenausgänge sind mit dem Lastnetz und jeweils über einen elektronischen Phasenschieber mit dem dritten Phasenausgang verbunden. Die Phasenschieber dienen zur Symmetrierung der Last.

Vorteilhaft ist zwischen den ans Lastnetz angeschlossenen Phasenausgängen ein weiterer elektronischer Phasenschieber mit Parallelkapazität angeordnet, um die Blindleistung des Lastnetzes zu kompensieren. Als elektronischer Phasenschieber wird bevorzugt eine stellergesteuerte induktive Last mit Parallelkapazität verwendet.

Der Direktumrichter enthält vorteilhaft für jede Ausgangsphase je einen Umkehrstromrichter, der durch Reihenschaltung von Teilumrichtern mit phasenversetzten Eingangsspannungen eine hohe Pulszahl aufweist und folgegesteuert ist. Bei Drehstrom-Drehstrom-Direktumrichtern bietet sich gegenüber Umrichtern mit Einphasenausgang die Möglichkeit, die Ausgangsspannung auf Trapezform zu steuern (z. B. nach der DE-PS 2 415 398 oder der DE-PS 2 509 177) und dadurch den Wirkungsgrad zu erhöhen. So kann der Leistungsfaktor $\lambda \cong 1$ erreicht werden.

Für die elektronischen Phasenschieber sind Filterkreise zweckmäßig, wobei die Kapazitäten dieser Filterkreise vorteilhaft von Kondensatoren gebildet sind, die bereits zum elektronischen Phasenschieber gehören.

Anhand zweier Ausführungsbeispiele und dreier Figuren wird die Erfindung näher erläutert.

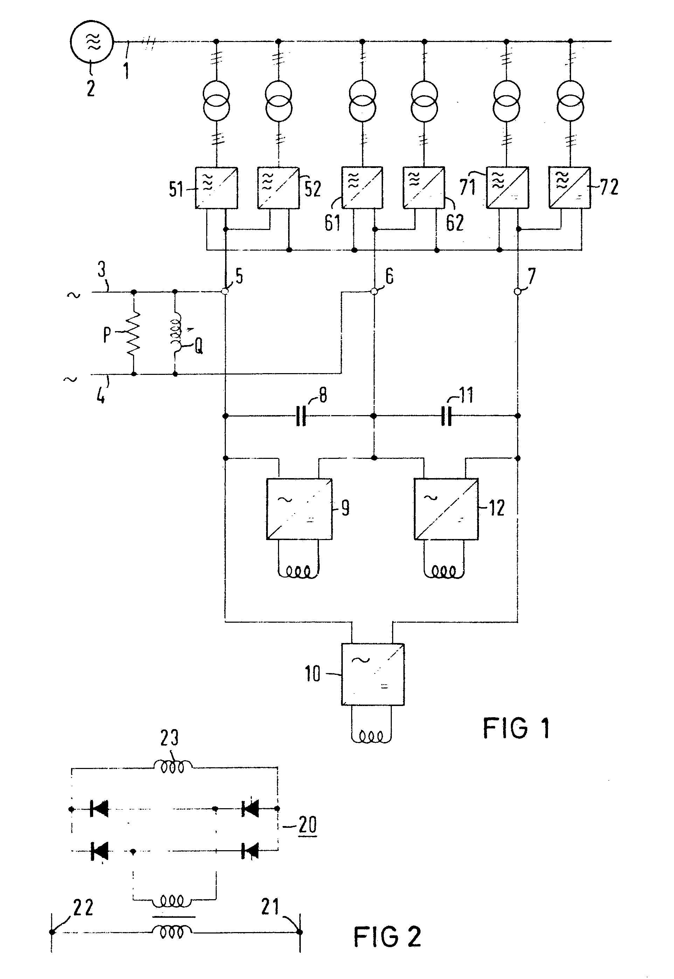

Figur 1 zeigt schematisch den Aufbau einer Vorrichtung nach der Erfindung. Zwischen dem dreiphasigen 50-Hz-Versorgungsnetz 1, das z. B. von einem Verbundnetz oder einem Drehstromgenerator 2 gespeist ist, und den zwei Polen 3, 4 eines 16 2/3-Hz-Wechselstromnetzes ist anstelle eines üblicherweise für die frequenzuntersetzte Speisung eines Wechselstromverbrauchers vorgesehenen Umrichters mit Einphasenausgang gemäß der Erfindung ein Umrichter mit drei Phasenausgängen 5, 6, 7 vorgesehen. Als Umrichter wird ein Direktumrichter verwendet, der vorzugsweise für jeden Phasenausgang aus zwei gesteuerten, antiparallel geschalteten netzgeführten Stromrichtern 51, 52 bzw. 61, 62 bzw. 71, 72 besteht. Das Lastnetz 3, 4 ist mit den zwei Ausgängen 5, 6 der drei Phasenausgänge dieses Drehstrom-Drehstrom-Direktumrichters verbunden.

Für diesen Direktumrichter bedeutet die in das Lastnetz einzuspeisende Wirkleistung, die in Figur 1 als ohmsche Last P symbolisiert ist, eine Schieflast, die normalerweise auch eine veränderliche Blindlastkomponente Q, dargestellt durch eine veränderliche induktive Last, enthält. Diese Blindkomponente Q wird kompensiert durch einen ersten Kondensator 8 und einen dazu parallelen elektronischen Phasenschieber 9, die parallel zu den Lastnetz-Phasenausgängen 5 und 6 des Direktumrichters geschaltet sind.

Die dann noch verbleibende Unsymmetrieleistung, deren Betrag gleich dem der Wirkleistung P ist, kann auf an sich bekannte Weise (Verfahren von Steinmetz vgl. VDE-Buchreihe Bd. 10 (1963) »Blindleistung«, Seite 195, 196 und »elektrowärme international« 32 (1974) S. 328, 329, Bild 5) kompensiert werden. Hierzu ist zwischen dem einen mit dem Lastnetz verbundenen Phasen-Ausgang 5 und dem dritten Phasenausgang 7 des Direktumrichters ein veränderbarer induktiver Widerstand, zwischen dem anderen mit dem Lastnetz verbundenen Phasenausgang 6 und dem dritten Phasenausgang 7 ein veränderbarer kapazitiver Widerstand angeordnet. Dadurch können — bei entsprechender Abstimmung dieser Widerstände auf die Last — zwischen allen Phasenausgängen des Direktumrichters symmetrische Ströme fließen. Wegen der vorgenommenen Kompensation der Blindlastkomponente ist nur eine Abstimmung auf den der Leistung P entsprechenden Laststrom I erforderlich, wobei die Widerstände jeweils auf einen Strom $I/\sqrt{3}$ eingestellt werden. Die veränderbare Induktanz zwischen den Phasenausgängen 5 und 7 ist durch einen zweiten elektronischen Phasenschieber 10, die Kapazität zwischen den Phasenausgängen 6 und 7 durch einen zweiten Kondensator 11 und einen dazu parallelen dritten Phasenschieber 12 realisiert.

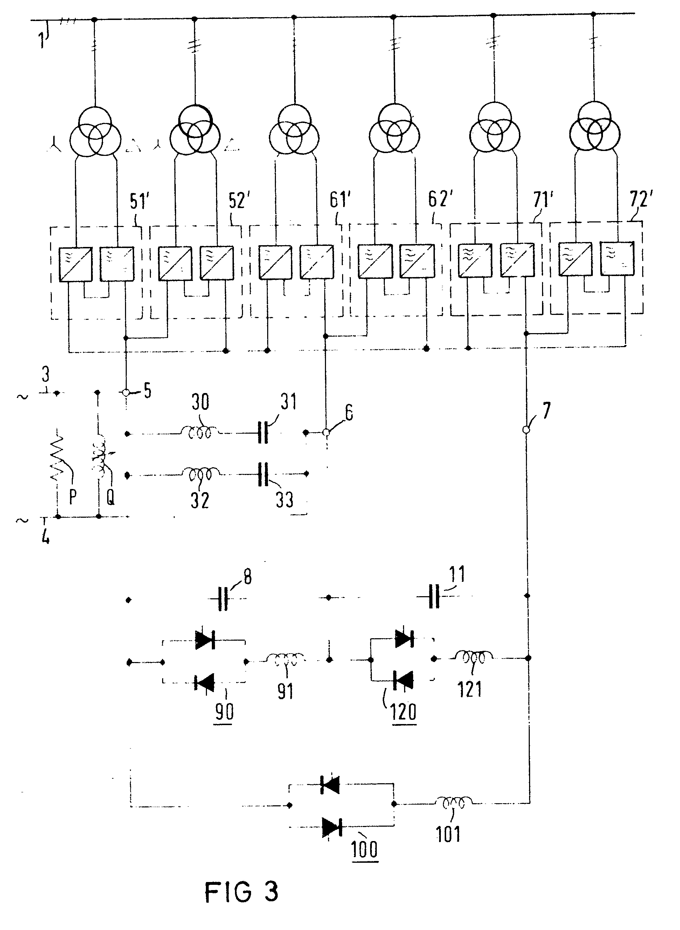

Die elektronischen Phasenschieber können im Prinzip als zweipulsige netzgeführte Stromrichter im Kurzschlußbetrieb ausgebildet sein. In Figur 2 ist ein derartiger an sich bekannter netzgeführter Stromrichter 20 (»elektrowärme international« 32 (1974), S. 332, Bild 11) dargestellt, dessen Eingang an die induktiv zu belastenden Phasenausgänge 21, 22 gekoppelt und dessen Ausgang über eine Drosselspule 23 kurzgeschlossen wird. Die Abstimmung auf den Laststrom erfolgt über die Aussteuerung der Stromrichterventile. Ist zwischen die Phasenausgänge 21, 22 zusätzlich eine Kapazität gelegt, so kann dadurch auch ein veränderbarer kapazitiver Widerstand realisiert werden.

Da zweipulsige Stromrichter bei 16 2/3 Hz große Glättungsdrosseln erfordern, wird jedoch als Phasenschieber eine stellergesteuerte induktive Last bevorzugt, wie es in dem in Figur 3 dargestellten bevorzugten Ausführungsbeispiel der Erfindung gezeigt ist.

Bei dem verwendeten Drehstrom-Direktumrichter, der wie in Figur 1 für jeden Phasenausgang 5, 6, 7 einen Umkehrstromrichter aus zwei antiparallel geschalteten Stromrichtern 51', 52' ... enthält, werden höherpulsige Stromrichter verwendet, die mit Folgesteuerung betrieben werden können. Die Blindlastkompensation erfolgt wiederum über den Kondensator 8 und einen dazu parallelen Phasenschieber zwischen den Phasenausgängen 5 und 6. Der Phasenschieber besteht, wie oben erwähnt wurde, vorteilhaft aus einem steuerbaren Steller 90 und einer nachgeschalteten Drossel 91. Auch die veränderbare induktive Last zwischen den Phasen 5 und 7 ist durch einen derartigen stellergesteuerten Phasenschieber 100, 101 und die veränderbare kapazitive Last zwischen den Phasen 6 und 7 durch eine derartige Anordnung 120, 121 mit parallelem Kondensator 11 verwirklicht. Zur Steuerung der Steller 90, 100, 120 werden der Strom I und die Blindleistung am Lastnetz gemessen und die Steuerspannung für die Ventile des Stellers 90 auf verschwindende Blindleistung und die Steuerspannungen für die Ventile der Steller 100 und 120 auf den Strom $I/\sqrt{3}$ geregelt.

Ferner ist wegen der vom Steller 90 erzeugten Oberschwingungen im Lastkreis ein Filter für 50 Hz aus einer LC-Reihenschaltung 30, 31 vorgesehen. Häufig ist ein weiterer Filter 32, 33 für 83 1/3 Hz vorteilhaft. Der Kondensator 8 kann unter Berücksichtigung dieser Kapazitäten kleiner ausgelegt werden als in Figur 1. Auch für die Steller 100 und 120 sind zusätzlich Filter vorteilhaft, wobei die für den Steller 120 vorgesehene Kapazität im Kondensator 11 enthalten ist. Diese Filter können jedoch kleiner ausgelegt sein als die Filter 30 bis 33 und sind in Figur 3 nicht dargestellt.

Durch die Verwendung von Phasenschiebern zur Symmetrierung der einphasigen Last wird trotz des zunächst beträchtlich erscheinenden Aufwandes eine wirtschaftliche Verwendung eines Direktumrichters zur Energieeinspeisung im hohen Leistungsbereich möglich. Die Blindlastkompensation ermöglicht es, den Aufwand für die lediglich an den Laststrom anzupassenden Phasenschieber und den Direktumrichter so gering wie möglich zu halten. Insbesondere bei Verwendung höherpulsiger Umrichter, die — wie bei großer Leitung ohne Mehraufwand möglich ist — mit Folgesteuerung betrieben werden, ist die Steuerblindleistung verhältnismäßig klein. Auf der 50-Hz-Seite wird daher ein Leistungsfaktor $\lambda \approx 1$ erreicht. Der Umrichter und gegebenenfalls der Drehstromgenerator zur Drehstromerzeugung werden optimal ausgenutzt.

**Patentansprüche**

1. Vorrichtung zur Übertragung elektrischer Energie hoher Leistung aus einem dreiphasigen Versorgungsnetz (1) höherer Frequenz in ein einphasiges Lastnetz (3, 4) niedrigerer Frequenz, gekennzeichnet durch einen am Versorgungsnetz (1) angeschlossenen frequenzuntersetzenden Direktumrichter (51, 52, 61, 62, 71, 72) mit einem dreiphasigen Ausgang (5, 6, 7), bei dem zwei Phasenausgänge (5, 6) mit dem Lastnetz (3, 4) und jeweils über einen elektronischen Phasenschieber (10, 12) zur Symmetrierung der Last mit dem dritten Phasenausgang (7) verbunden sind.

2. Vorrichtung nach Anspruch 1, gekennzeichnet durch einen zwischen den ans Lastnetz angeschlossenen Phasenausgängen (5, 6) angeordneten elektronischen Phasenschieber (9) mit Parallelkapazität (8), um die Blindleistung des Lastnetzes zu kompensieren.

3. Vorrichtung nach Anspruch 1 oder 2, dadurch gekennzeichnet, daß jeder auf einen Phasenausgang (5 bzw. 6 bzw. 7) arbeitende Umkehrstromrichter (51', 52' bzw. 61', 62' bzw. 71', 72') des Direktumrichters durch Reihenschaltung von Teilstromrichtern mit phasenversetzten Eingangsspannungen eine hohe Pulszahl aufweist und folgegesteuert ist.

4. Vorrichtung nach einem der Ansprüche 1 bis 3, gekennzeichnet durch Filterkreise im Lastnetz.

**Claims**

1. A device for the transmission of electric energy of high power from a three-phase supply network (1) of high frequency into a single-phase load network (3, 4) of low frequency, characterised by a frequency-dividing direct converter (51, 52, 61, 71, 72) which is connected to the supply network (1) and has a threephase output (5, 6, 7), wherein two phase outputs (5, 6) are connected to the load network (3, 4) and also by means of an electronic phase shifter (10, 12) to the third phase output (7) in each case in order to balance the load.

2. A device as claimed in Claim 1, characterised by an electronic phase shifter (9) arranged between the phase outputs (5, 6) connected to the load network, with a parallel capacity (8) to compensate the reactive power of the load network.

3. A device as claimed in Claim 1 or 2, characterised in that as a result of the series connection of partial rectifiers with phase-shifted input voltages, each two-way rectifier (51', 52' and 61', 62' and 71', 72') of the direct converter which operates on one phase output (5 or 6 or 7) has a high pulse number and is sequence-controlled.

4. A device as claimed in one of Claims 1 to 3, characterised by filter circuits in the load network.

**Revendications**

1. Dispositif pour le transfert d'une énergie électrique de puissance élevée d'un réseau d'alimentation triphasé (1) à un réseau de charge monophasé (3, 4) de fréquence plus basse, caractérisé par un convertisseur direct (51, 52, 61, 62, 71, 72) à démultiplication de fréquence, relié au réseau d'alimentation (1), possédant une sortie triphasée (5, 6, 7), et dans lequel deux sorties de phases (5, 6) sont reliées au réseau de charge (3, 4) et, respectivement, par l'intermédiaire d'un déphaseur électronique (10, 12), à la troisième sortie de phase (7) en vue de l'équilibrage de la charge.

2. Dispositif selon la revendication 1, caractérisé par un déphaseur électronique (9), à capacité parallèle, et disposé entre les sorties de phases (5, 6) reliées au réseau de charge, en vue de compenser la puissance réactive du réseau de charge.

3. Dispositif selon la revendication 1 ou 2, caractérisé par le fait que chaque convertisseur à dispositif inverseur (51', 52' ou 61', 62' ou 71', 72') du convertisseur direct, opérant sur une sortie de phase (5 ou 6 ou 7) présente un nombre d'impulsions élevé et est commandé, avec asservissement, par un montage série de convertisseurs de courants partiels à tensions d'entrée déphasées.

4. Dispositif selon l'une des revendications 1 à 3, caractérisé par des circuits de filtrage dans le réseau de charge.

FIG 1

FIG 2

5

FIG 3